# EUROPÄISCHE PATENTSCHRIFT

(11) **EP 2 643 872 B1**
(45) Veröffentlichungstag und Bekanntmachung des Hinweises auf die Patenterteilung: **01.05.2019**
(21) Anmeldenummer: 11794640.0
(22) Anmeldetag: 26.11.2011
(51) Int. Cl.: H01M 2/20, H01R 4/50

(54) **KONTAKTVORRICHTUNG IN EINEM AKKUBLOCK**
CONTACT DEVICE IN A BATTERY PACK
DISPOSITIF DE CONTACT DANS UN BLOC BATTERIE

(30) Priorität: 26.11.2010 DE 102010052507
(43) Veröffentlichungstag der Anmeldung: 02.10.2013
(73) Patentinhaber: ads-tec GmbH, 72622 Nürtingen (DE)
(72) Erfinder: SPEIDEL, Thomas, 71706 Markgröningen (DE)
(74) Vertreter: Wasmuth, Rolf
(86) Internationale Anmeldenummer: PCT/EP2011/005951
(87) Internationale Veröffentlichungsnummer: WO 2012/069209

(56) Entgegenhaltungen:
- EP-A1- 2 337 155
- WO-A1-2007/063877
- WO-A1-2010/071464
- WO-A1-2011/067697
- DE-A1- 10 101 050

## Beschreibung

Die Erfindung betrifft eine Kontaktvorrichtung in einem Akkublock aus einer Vielzahl einzelner Akkuzellen, insbesondere Flachzellen, die in einer vorgegebenen Anordnung zueinander gehalten sind, nach dem Oberbegriff des Anspruchs 1.

Aus der WO 2007/121445 A sind Akkublocks bekannt, die aus einer Vielzahl von Akkuzellen bestehen, die innerhalb eines Gehäuses des Akkublocks in einer vorgegebenen Anordnung als Reihen- oder Parallelschaltung elektrisch miteinander verbunden sind und die Spannung sowie die Kapazität des Akkublocks bestimmen. Moderne Akkublocks bestehen aus Flachzellen in der Form von Pouchzellen auf Lithium-Basis, die als Kern einen Stapel von wechselweise geschichteten Anodenfolien und Kathodenfolien aufweisen, die jeweils durch Separatorfolien voneinander getrennt sind. Der Folienstapel ist in einer Gehäusefolie aufgenommen, die eine umlaufende Siegelnaht aufweist. Ein flacher Kathodenableiter und ein flacher Anodenableiter sind aus der Siegelnaht der Flachzelle herausgeführt und dienen der elektrischen Verbindung der Flachzellen untereinander.

Derartige Flachzellen sind in der vorgegebenen Anordnung in einem Gehäuse eines Akkublocks gehalten, wobei die Anordnung der elektrisch untereinander verbundenen Flachzellen mit einem ersten äußeren Anschlusspol des Akkublocks (Pluspol) und einem zweiten äußeren Anschlusspol des Akkublocks (Minuspol) verbunden ist. Die aus den einzelnen Akkuzellen jeweils herausgeführten Kathodenableiter und Anodenableiter liegen zur einfachen Herstellung einer elektrischen Verbindung nebeneinander und werden über eine Kontaktvorrichtung elektrisch miteinander verbunden. Die Kontaktvorrichtung besteht aus einem zwischen den nebeneinander liegenden Ableitern benachbarter Flachzellen liegenden Distanzelement und einem die Ableiter und das Distanzelement übergreifenden Klemmelement, das die Ableiter elektrisch verbindend auf den Seitenflächen des Distanzelementes hält.

Aus der WO 2010/071464 A ist bekannt, die Ableiter zwischen elektrisch isolierenden Elementen derart umformend zu verspannen, dass zwischen den übereinander liegenden und aufeinander verklemmten Ableitern eine innige elektrische Kontaktierung hergestellt ist.

Die über die Ableiter fließenden Ströme in der Anordnung von Akkuzellen eines derartigen Akkublocks liegen im Bereich von einigen Hundert Ampere, so dass jeder im Stromkreis liegende Übergangswiderstand zu signifikanten elektrischen Verlusten und einer entsprechenden Wärmeentwicklung führt.

Der Erfindung liegt die Aufgabe zugrunde, den Übergangswiderstand im Stromkreis eines Akkublocks gering zu halten.

Die Aufgabe wird erfindungsgemäß nach den kennzeichnenden Merkmalen des Anspruchs 1 gelöst.

Das aus einem im Querschnitt etwa U-förmigen Grundkörper bestehende Klemmelement weist auf den Schenkeln einander zugewandte, innere Druckflächen auf, wobei jeder Druckfläche eine Seitenfläche des Distanzelementes gegenüberliegt. Die Druckflächen des Klemmelementes und die Seitenflächen des Distanzelementes liegen unter einem Winkel zu ihrer jeweiligen Längsmittelebene. Wird nun zwischen dem Klemmelement und dem Distanzelement ein Ableiter angeordnet und eine Verbindungskraft aufgebracht, wird sich diese in der Ebene des Ableiters bzw. der Druckfläche in eine parallel zur Druckfläche wirkende Scherkraft und eine senkrecht zur Druckfläche wirkende Fügekraft aufteilen. Die Fügekraft gewährleistet ein festes Andrücken der Druckfläche auf die Ableiter und wird über die Seitenflächen des Distanzelementes abgestützt, wobei eine gute elektrische Verbindung zwischen dem Distanzelement und den Ableitern einerseits und den Ableitern und den Druckflächen des Klemmelementes andererseits geschaffen ist. Die Scherkraft bewirkt ein Aufbrechen einer sich auf dem Ableiter eventuell gebildeten Oxidschicht. Dadurch wird eine elektrische Kontaktierung mit einem sehr geringen Übergangswiderstand von nur wenigen mΩ erreicht.

Zur weiteren Absenkung des elektrischen Übergangswiderstandes ist vorgesehen, die Druckfläche des Klemmelementes und/oder die Seitenfläche des Distanzelementes durch eine dreidimensionale Oberflächenstruktur aufzurauen. Dies führt beim Festschrauben des Klemmelementes auf dem Distanzelement aufgrund der wirkenden Fügekräfte zu einem teilweisen Eindringen der Oberflächenstruktur in das Material des Ableiters als auch zu einer Verformung der Oberflächenstruktur, so dass ein im weiteren Sinne stoffschlüssiger Kontakt zwischen dem Distanzelement, dem Ableiter und dem Klemmelement geschaffen ist. Dies gewährleistet einen sehr geringen Übergangswiderstand im Bereich von wenigen mΩ.

Das Klemmelement und/oder das Distanzelement bestehen aus einem elektrisch leitenden Material. Ist das Distanzelement aus elektrisch leitendem Material und das Klemmelement aus elektrisch leitendem Material gebildet, werden die elektrisch zu verbindenden Ableiter einerseits über das Distanzelement elektrisch verbunden und andererseits über das Klemmelement elektrisch verbunden. Dadurch ergibt sich eine elektrische Parallelschaltung, die zu einer weiteren Senkung des Übergangswiderstandes der elektrischen Verbindungsstrecke zwischen den Ableitern beiträgt.

Um eine flächige Anlage sowohl der Seitenfläche des Distanzelementes am Ableiter als auch der Druckfläche des Klemmelementes am Ableiter zu gewährleisten, liegen die Druckfläche und die ihr gegenüberliegende Seitenfläche etwa parallel zueinander.

Die Druckflächen begrenzen einen sich zum Distanzelement erweiternden Aufnahmeraum, in dem das Distanzelement im Wesentlichen vollständig aufgenommen ist. Zweckmäßig entspricht die Öffnungsweite des Aufnahmeraums des Klemmelementes etwa der äußeren Fußbreite des Distanzelementes.

Um die Verbindungskraft zwischen dem Klemmelement und dem Distanzelement frei einstellen zu können, ist vorgesehen, dass bei Abstützung der Druckflächen auf den Seitenflächen zwischen dem Dachabschnitt des Distanzelementes und dem Boden des Klemmelementes ein Spaltraum verbleibt. Auch nach Aufbringen einer Verbindungskraft stützt sich das Klemmelement somit ausschließlich über seine Druckflächen auf den Seitenflächen des Distanzelementes ab. Zweckmäßig wird die Verbindungskraft durch eine Schraubverbindung aufgebracht, wozu das Klemmelement auf dem Distanzelement verschraubt ist.

Um ein Aufweiten des Grundkörpers des Klemmelementes zu minimieren, sind die Schenkel des Grundkörpers steif ausgebildet, z. B. durch entsprechende Materialdicke.

Das Klemmelement und/oder das Distanzelement bestehen aus Aluminium.

Das Klemmelement weist eine äußere Teilumhüllung aus einem elektrisch isolierenden Material, vorzugsweise Kunststoff auf. Die Teilumhüllung ist dabei zweckmäßig so ausgebildet, dass im Wesentlichen die gesamte Außenfläche des Klemmelementes einschließlich dessen Stirnflächen abgedeckt sind. Dies gewährleistet eine sichere elektrische Isolierung der in Reihen nebeneinander liegenden Klemmelemente der Kontaktvorrichtung.

Um die elektrische Kontaktierung weiter zu verbessern, ist vorgesehen, das Distanzelement und/oder das Klemmelement mit einer Beschichtung aus Nickel, Zinn, Silber oder dgl. Material zu versehen.

Weitere Merkmale der Erfindung ergeben sich aus den weiteren Ansprüchen, der Beschreibung und der Zeichnung, in der ein nachfolgend beschriebenes Ausführungsbeispiel der Erfindung dargestellt ist. Es zeigen:
- Fig. 1: eine perspektivische Ansicht eines Akkublocks,
- Fig. 2: einen schematischen Längsschnitt durch den Akkublock nach Fig. 1,
- Fig. 3: in perspektivischer Darstellung den Deckel eines Gehäuses eines Akkublocks mit Kontaktvorrichtungen,
- Fig. 4: einen schematischen Schnitt durch eine Ableiter klemmende Kontaktvorrichtung in der Höhe einer Befestigungsschraube,
- Fig. 5: eine schematische perspektivische Ansicht eines Klemmelementes der Klemmvorrichtung,
- Fig. 6: eine Stirnansicht des Klemmelementes der Klemmvorrichtung gemäß Fig. 5,
- Fig. 7: einen Längsschnitt durch das Klemmelement nach Fig. 5,
- Fig. 8: eine schematische perspektivische Ansicht eines Distanzelementes der Klemmvorrichtung,
- Fig. 9: eine Stirnansicht des Distanzelementes der Klemmvorrichtung nach Fig. 8,
- Fig. 10: einen schematischen Schnitt durch eine Kontaktvorrichtung mit nur einem Ableiter in der Höhe einer Befestigungsschraube.

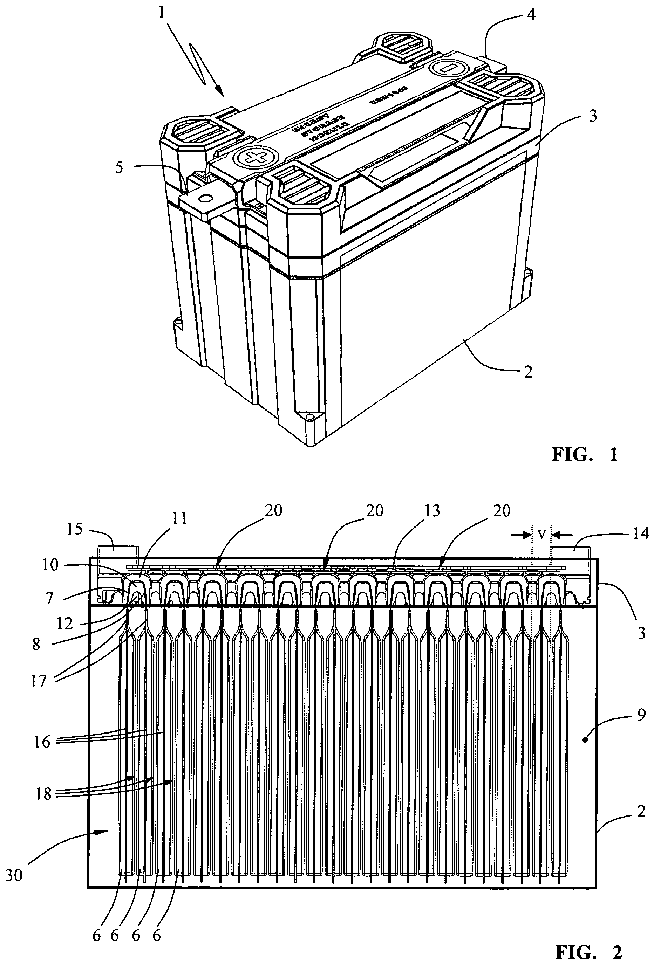

Der in Fig. 1 gezeigte Akkublock 1 besteht aus einem Gehäuse 2 mit einem Deckel 3. Aus dem Deckel ragen auf der Schmalseite des Gehäuses 2 kurze Anschlussschienen 4 und 5 heraus, die jeweils den Minuspol (Anschlussschiene 4) und den Pluspol (Anschlussschiene 5) bilden.

Die Anschlussschienen 4 und 5 sind auf Anschlusspolen 14 und 15 (Fig. 2) aufgeschraubt und dienen der Verkettung mehrerer Akkublocks 1 zu einem elektrischen Strang.

Wie aus der schematischen Ansicht in Fig. 2 zu ersehen, sind im Gehäuse 2 des Akkupacks 1 eine Vielzahl von Akkuzellen als elektrochemische Energiespeicher in einer vorgegebenen Anordnung 30 angeordnet, wobei jede Akkuzelle 6 mit Ableitern 7 und 8 in den Deckel 3 einragt. Der Innenraum 9 des die Flachzellen umschließenden Gehäuses 2 kann mit einem Medium gefüllt sein, von einem Temperiermedium durchströmt sein oder mit einem Inertgas gefüllt sein. Im Folgenden sind die Akkuzellen als Flachzellen 6 beschrieben; dies ist eine mögliche Form der Akkuzelle.

Moderne Flachzellen 6 basieren chemisch auf Lithium und sind in der Form von Pouchzellen ausgeführt, die als Kern einen Stapel von wechselnd geschichteten Anodenfolien und Kathodenfolien aufweisen, die jeweils durch Separatorfolien voneinander getrennt sind. Der Folienstapel ist in einer Gehäusefolie aufgenommen, die durch eine umlaufende Siegelnaht 16, 17 dicht verschlossen ist. Die flächigen, insbesondere rechteckigen Ableiter (Anode und Kathode) 7, 8 sind aus der oberen, breiter ausgeführten Siegelnaht 17 der Flachzelle 6 herausgeführt und dienen der elektrischen Verbindung der Flachzellen 6 untereinander.

Die Flachzellen 6 sind innerhalb des Gehäuses 2 mechanisch derart gehalten, dass zwischen benachbarten Flachzellen 6 jeweils ein freier Spalt oder Zwischenraum 18 ausgebildet ist. Dieser dient der Abfuhr von Wärme und stellt sicher, dass die Gehäusefolie der Zellen untereinander nicht in mechanischen Kontakt treten.

Je zwei Ableiter 7, 8 einander benachbarter Flachzellen 6 sind über eine Kontaktvorrichtung 20 elektrisch miteinander verbunden. Die Kontaktvorrichtung 20 besteht aus einem länglichen Distanzelement 10 und einem länglichen Klemmelement 11, wobei die in der Ebene einer Flachzelle 6 gemessene Länge eines Distanzelementes 10 größer ist als die in gleicher Richtung gemessene Breite eines Ableiters 7 bzw. 8. Zwischen je zwei Ableitern 7, 8 einander benachbarter Flachzellen 6 liegt jeweils ein gemeinsames Distanzelement 10, das mit Anschlussenden 31 aus dem Klemmelement 11 herausragt und in einem elektrisch isolierenden Material des Deckels 3 formschlüssig gehalten, insbesondere vom Material des Deckels 3 umspritzt ist. Jedes Distanzelement 10 weist einen inneren Kanal 12 auf, durch den ein Temperiermedium, z. B. eine Kühlflüssigkeit strömt. Das Material des Deckels 3 ist insbesondere Kunststoff.

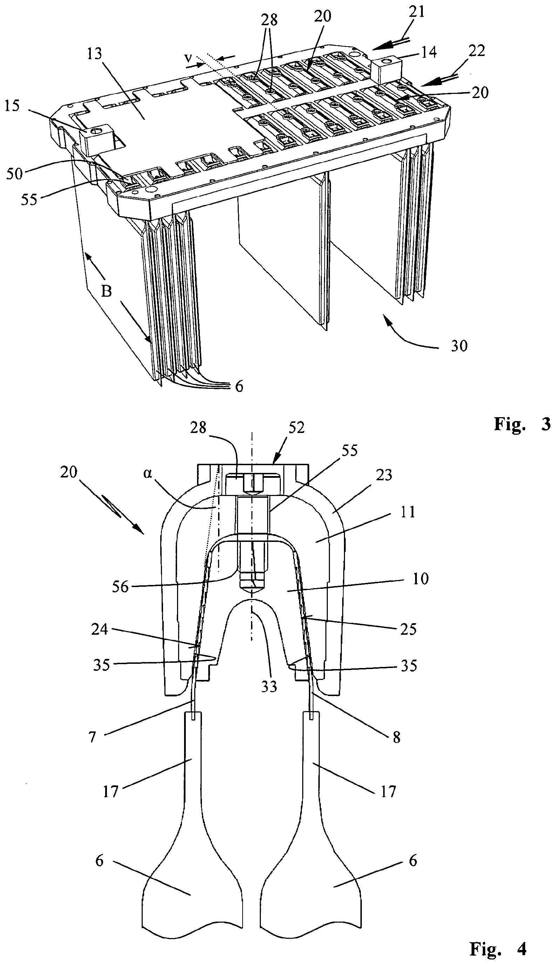

Die Ableiter 7 und 8 benachbarter Flachzellen 6 liegen auf den Seitenflächen 24, 25 (Fig. 4) eines Distanzelementes 10 auf, wobei die Seitenfläche 24, 25 größer ausgebildet ist als die Fläche des aufliegenden Ableiters 7, 8; die Ableiter 7 und 8 haben unterschiedliche Polarität (Anode und Kathode), so dass in der gezeigten Ausfuhrungsform alle Flachzellen 6 eines Akkublocks 1 miteinander elektrisch in Reihe geschaltet sind. Die Anschlusspole 14 und 15 bilden die Enden der elektrischen Reihenschaltung. Die Ableiter 7 und 8 benachbarter Flachzellen 6 sind von dem Klemmelement 11 einer Kontaktvorrichtung 20 gemeinsam übergriffen, welches auf das zugeordnete Distanzelement 10 aufgeschraubt ist (Fig. 3, 4). Dadurch wird ein inniger elektrischer Kontakt zwischen dem Klemmelement 11 einerseits und den Ableitern 7 oder 8 andererseits sowie zwischen den Ableitern 7 oder 8 und dem Distanzelement 10 gewährleistet. Das Distanzelement 10 kann ebenso wie das Klemmelement 11 aus einem elektrisch leitfähigen Material gefertigt sein, insbesondere aus Aluminium. Zweckmäßig sind sowohl das Distanzelement 10 als auch das Klemmelement 11 aus einem elektrisch leitenden Material, insbesondere Aluminium gefertigt.

Die Kanäle 12 aller Distanzelemente 10 eines Akkublocks 1 sind in Strömungsrichtung in Reihe miteinander verbunden, wodurch ein mäanderförmiger Kühlkanal vom Pol 14 zum Pol 15 verläuft. Der mäanderförmige Kühlkanal wird über einen Zulauf mit Temperiermedium, insbesondere Kühlflüssigkeit gespeist.

Oberhalb der Klemmelemente 11 ist im Deckel 3 eine Platine 13 eines Batteriemanagementsystems vorgesehen, wobei das Potenzial jedes Klemmelementes 11 über eine elektrische Verbindung 50 (Fig. 3) auf die Platine des Batteriemanagementsystems (BMS) aufgeschaltet ist. Im BMS werden die elektrischen Potenziale zwischen benachbarten Flachzellen 6 ausgewertet und so eine elektrische Überwachung der Ausgangsspannung jeder einzelnen Flachzelle 6 gewährleistet.

Der teilperspektivischen Darstellung nach Fig. 3 ist zu entnehmen, dass jeweils über die Breite B einer Flachzelle 6 zwei Kontaktvorrichtungen 20 vorgesehen sind, die sowohl den Kathodenableiter wie den Anodenableiter einer mittleren Flachzelle 6 mit dem jeweils zugeordneten Ableiter 7 bzw. 8 der einen und der anderen benachbarten Flachzelle 6 verbinden. Dadurch bilden sich über die Länge einer Anordnung 30 bzw. des Akkublocks 1 zwei Reihen 21, 22 von Kontaktvorrichtungen 20 aus, wobei die Kontaktvorrichtungen 20 der einen Reihe 21 zu den Kontaktvorrichtungen 20 der anderen Reihe 22 um einen Versatz v in Längsrichtung des Akkublocks 1 versetzt liegen.

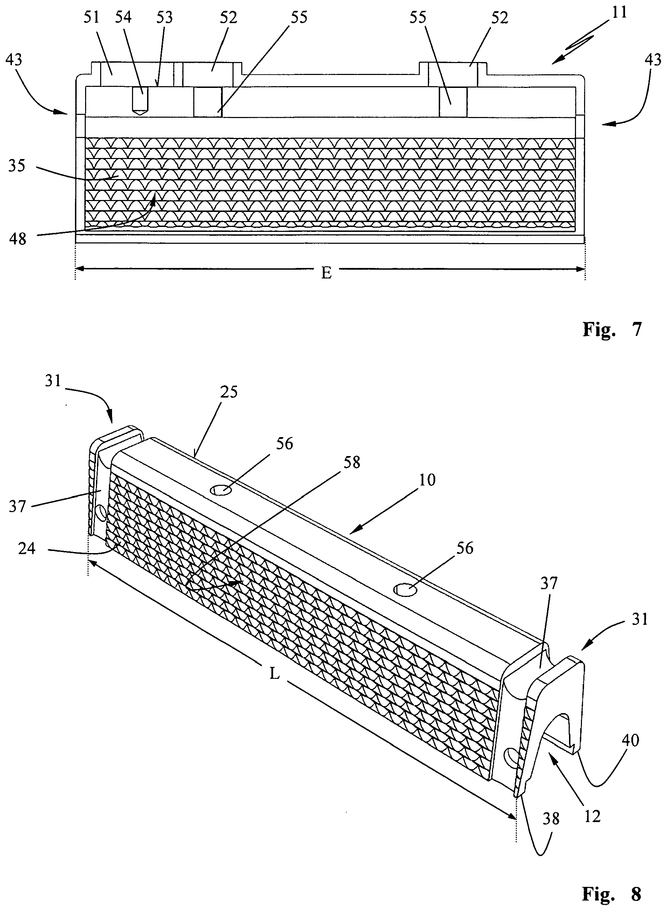

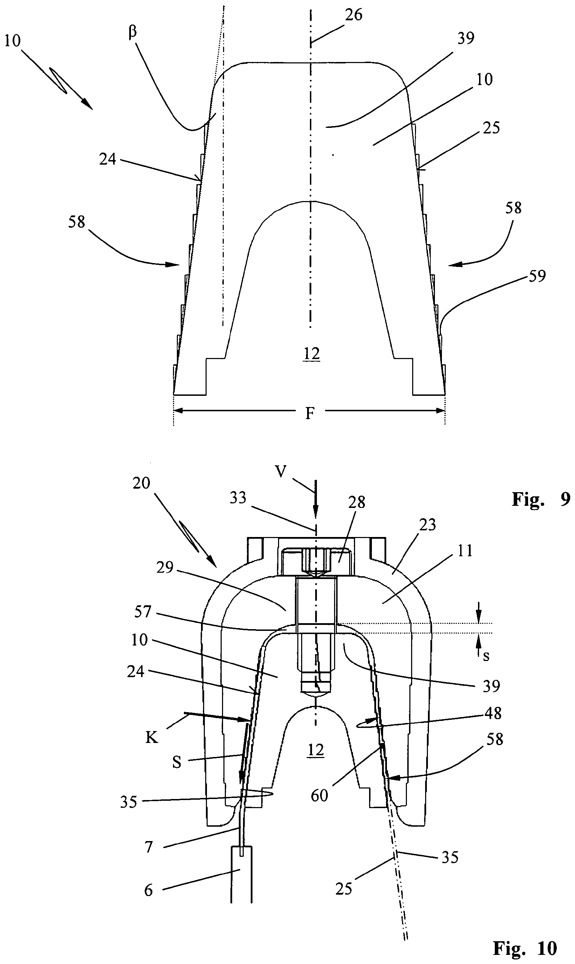

Eine Kontaktvorrichtung 20 ist in Fig. 4 im Schnitt wiedergegeben. Das Distanzelement 10 hat im Schnitt etwa U-förmige bis V-förmige Gestalt, wobei die äußeren Seitenflächen 24 und 25 unter einem Winkel α zur Längsmittelebene 26 des Distanzelementes 10 liegen. Die aus der oberen Siegelnaht 17 herausgeführten Ableiter 7 und 8 benachbarter Flachzellen 6 liegen auf den mit einer aufgerauten Oberflächenstruktur 27 (Fig. 8, 9) versehenen Seitenflächen 24 und 25 des Distanzelementes 10 auf. Das Klemmelement 11 ist im Querschnitt etwa U-förmig ausgebildet und übergreift das Distanzelement 10 und die auf dessen Seitenflächen 24 und 25 aufliegenden Ableiter 7 und 8. Jedes Klemmelement 11 wird mit Befestigungsschrauben 28 (Fig. 3, 4) auf dem Distanzelement 10 aufgeschraubt, wodurch eine sichere mechanische Halterung der Ableiter 7 und 8 zwischen dem Distanzelement 10 und dem Klemmelement 11 bei guter elektrischer Kontaktierung gewährleistet ist; zugleich wird durch die Gestalt des Distanzelementes 10 und des Klemmelementes 11 und die Art der Klemmung - und die durch vorteilhaft mindestens zwei Befestigungsschrauben 28 aufgebrachte hohe Verbindungskraft - eine innige elektrische Kontaktierung mit geringem Übergangswiderstand erzielt.

Wie in Fig. 10 rechts dargestellt, verlaufen die Seitenfläche 25 des Distanzelementes 10 und die zugeordnete Druckfläche 35 des Klemmelementes 11 zueinander vorzugsweise etwa parallel. Zwischen dem Boden 29 des Klemmelementes 11 und dem Distanzelement 10 ist ferner ein Spalt s vorgesehen, so dass das Klemmelement 11 zum Dachabschnitt 39 des Distanzelementes 10 einen ausreichenden Spaltraum 57 hat. Durch Anziehen der Befestigungsschrauben 28 kann so über die Druckflächen 35 des Klemmelementes 11 eine ausreichend hohe Fügekraft auf die Ableiter 7, 8 aufgebracht werden kann, ohne dass das Klemmelement 11 mit seinem Boden 29 auf dem Dachabschnitt 39 des Distanzelementes 10 aufsitzen kann.

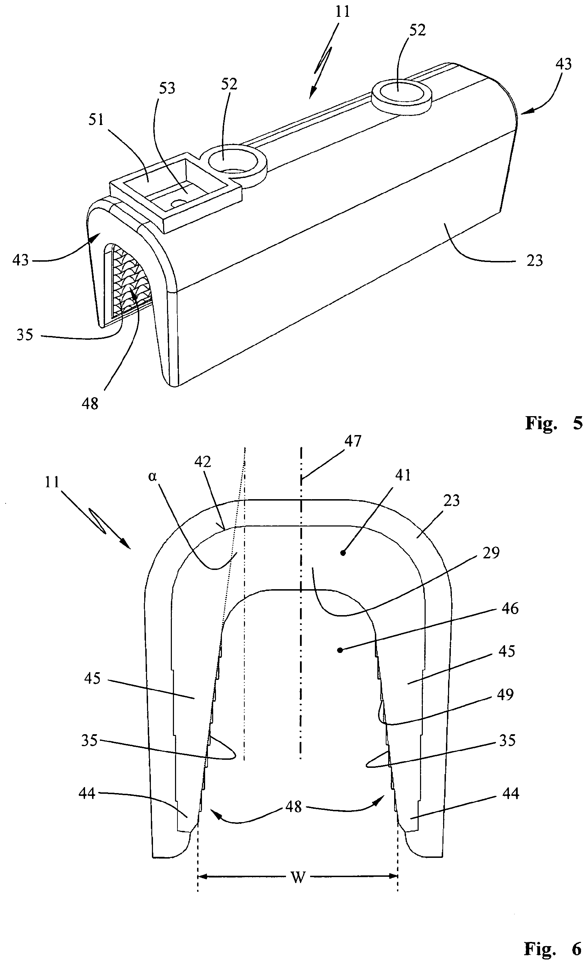

In den Figuren 5 bis 7 ist das Klemmelement 11 in seinen Einzelheiten wiedergegeben. Das Klemmelement 11 besteht im Wesentlichen aus einem Grundkörper 41 aus einem elektrisch leitfähigen Material, insbesondere Aluminium. Der Grundkörper 41 ist mit einer isolierenden Teilumhüllung 23 versehen, die insbesondere aus Kunststoff gebildet ist und sowohl die Außenfläche 42 des Grundkörpers 41 als auch deren Stirnseiten 43 abdeckt. Der Grundkörper 41 hat - wie Fig. 6 zeigt - einen im Wesentlichen U-förmigen bzw. V-förmigen Querschnitt, wobei die Teilumhüllung 23 jeweils den freien Rand 44 des Grundkörpers 41 hintergreift. Damit ist die Teilumhüllung 23 auch formschlüssig am Grundkörper 41 festgelegt.

Die Schenkel 45 des Grundkörpers weisen innere Druckflächen 35 auf, die - wie Fig. 10 zeigt - den Seitenflächen 24 bzw. 25 des Distanzelementes 10 gegenüberliegen. Dabei begrenzen die Druckflächen 35 einen inneren Aufnahmeraum 46 des Klemmelementes 11, der sich zu den Rändern 44 der Schenkel 45 erweitert. Der Aufnahmeraum 46 hat eine auf der Höhe der Ränder 44 liegende Öffnungsweite W, die etwa der äußeren Fußbreite F des übergriffenen Klemmelementes 11 (Fig. 9) entspricht.

Die Druckflächen 35 liegen unter einem Winkel α zur Längsmittelebene 47 des Grundkörpers 41 des Klemmelementes 11.

Die Druckflächen 35 weisen ferner eine raue Oberflächenstruktur 48 auf, die sich - wie Fig. 7 zeigt - im Wesentlichen über die gesamte Schenkelinnenseite ausbildet und die im Wesentlichen rechteckförmige Druckfläche 35 bildet. Die Oberflächenstruktur 48 ist zweckmäßig eine aufgeraute, dreidimensionale Oberflächenstruktur, die z. B. schuppig oder sägezahnartig gestaltet sein kann. Wie Fig. 6 zu entnehmen, ist im Ausführungsbeispiel eine im Schnitt sägezahnartige Struktur ausgebildet, wobei die Erhebung 49 eines Sägezahns dem offenen Ende des Aufnahmeraums 46 zugewandt liegt.

Wie Fig. 5 zeigt, ist die Teilumhüllung 23 im Bereich des Bodens 29 des Klemmelementes 11 mit Aussparungen 51, 52 versehen, wobei die Aussparungen 52 zur Aufnahme der Köpfe von Befestigungsschrauben 28 ausgebildet sind und die Aussparung 51 eine Kontaktfläche 53 freilegt, auf der die Verbindungen 50 der BMS-Platine 13 elektrisch kontaktierend festgelegt sind. Bevorzugt ist hierzu eine Schrauböffnung 54 ausgebildet, in die eine Befestigungsschraube 28 (Fig. 3) der elektrischen Verbindung 50 eingeschraubt ist.

Die Aussparungen 52 legen eine Bohrung 55 frei, durch die - vgl. Fig. 4 - die Befestigungsschraube 28 durchgesteckt wird, um in Schrauböffnungen 56 des Distanzelementes 10 festgelegt zu werden, die den Gewindeabschnitt der Befestigungsschraube 28 aufnehmen.

Das in den Figuren 8 und 9 als Einzelteil dargestellte Distanzelement 10 weist eine Länge L auf, die größer als die Länge E (Fig. 7) des Klemmelementes 11 ist. Dadurch steht das Distanzelement 10 mit Anschlussabschnitten 31 über die Stirnseiten 43 heraus; die Anschlussabschnitte 31 dienen dem formschlüssigen Festlegen des Distanzelementes 10 im Material des Deckels 3 des Gehäuses 2 des Akkublocks 1. Um einen innigen Verbund mit dem Material des Deckels 3 zu gewährleisten, zeigt der Anschlussabschnitt 31 eine umlaufende Aufnahmenut 37, die sich von einem Schenkelende 38 in der Außenfläche des Distanzelementes 10 bis zum anderen Schenkelende 40 erstreckt.

Das Distanzelement 10 hat - vgl. Fig. 9 - im Schnitt eine U-förmige bis V-förmige Querschnittsform mit äußeren Seitenflächen 24, 25, die unter einem Winkel β zur Längsmittelebene 26 des Distanzelementes 10 verlaufen. Bevorzugt entspricht der Winkel β dem Winkel α beim Klemmelement 11, so dass - wie Fig. 10 rechts zeigt - die Seitenflächen 24, 25 etwa parallel zur Druckfläche 35 verlaufen.

Das Distanzelement 10 besteht bevorzugt aus einem elektrisch leitenden Material, insbesondere Aluminium, wobei dessen äußere Seitenflächen 24 und 25 aufgeraut sind. Die Seitenflächen 24 und 25 weisen bevorzugt eine Oberflächenstruktur 58 auf, die der Oberflächenstruktur 48 auf der Druckfläche 35 des Klemmelementes 11 entspricht. Entsprechend ist die Oberflächenstruktur 58 bevorzugt dreidimensional gestaltet, insbesondere schuppig oder sägezahnartig ausgebildet. In besonderer Weiterbildung der Erfindung ist - wie Fig. 10 zeigt - die Oberflächenstruktur 48 zur Oberflächenstruktur 58 nach Art eines Positivs/Negativs ausgebildet, wobei eine Verzahnung 60 zweckmäßig ist. Die Erhebung 59 der Verzahnung der Oberflächenstruktur 58 liegt dem Dachabschnitt 39 des Distanzelementes 10 zugewandt, wodurch die Erhebung 59 der Oberflächenstruktur 58 des Distanzelementes 10 der Erhebung 49 der Oberflächenstruktur 48 der Druckfläche 35 des Klemmelementes 11 gegenüberliegt. Die Verzahnung 60 der Oberflächenstruktur 58 und die Verzahnung der Oberflächenstruktur 48 können ineinandergreifen.

Wie in Fig. 10 dargestellt, liegt zwischen den Oberflächenstrukturen 48 und 58 ein Ableiter, z. B. der Ableiter 7 einer Flachzelle 6. Zur Montage ist der Ableiter 7 leicht zum Distanzelement 10 abgewinkelt und liegt über einen Großteil der Höhe der Seitenfläche 24 auf dieser auf. Nunmehr wird das Klemmelement 11 auf das Distanzelement 10 aufgesetzt, wobei das Klemmelement 11 die auf den Seitenflächen 24 und 25 aufliegenden Ableiter übergreift.

Durch Einschrauben der Befestigungsschraube 28 wird eine mechanische Verbindungskraft V zwischen dem Distanzelement 10 und dem Klemmelement 11 aufgebracht, wobei die Verbindungskraft V über den Kopf der Befestigungsschraube 28 unmittelbar in den Grundkörper 41 des Klemmelementes 11 eingeleitet wird. Durch Anziehen der Befestigungsschrauben 28 ist die Verbindungskraft V auf einen vorgegebenen Anzugswert einstellbar, wobei sich die Verbindungskraft V aufgrund der winklig zur Achse der Befestigungsschrauben 28 liegenden Druckflächen 35 in eine senkrecht zur Druckfläche 35 wirkende Fügekraft K und eine parallel zur Druckfläche wirkende Scherkraft S aufteilt. Durch Wahl des Winkels α kann die Größe der Scherkraft S eingestellt werden.

Beim Festschrauben des Klemmelementes 11 auf das Distanzelement 10 wirken somit auf den Ableiter 7 neben den Fügekräften K die Scherkraft S, wodurch ein Aufbrechen einer Oxidschicht auf dem Material des Ableiters ebenso gewährleistet ist wie auf dem Material des Distanzelementes 10 bzw. des Klemmelementes 11. Eine dreidimensionale Oberflächenstruktur 48 bzw. 58 unterstützt diese Wirkung und dringt in das Material des Ableiters ein, wobei sowohl Materialverformungen des Ableiters als auch Materialverformungen in der Oberflächenstruktur 48 bzw. 58 auftreten. Dadurch wird eine Art stoffschlüssige mechanische Verbindung erzielt, die zugleich einen signifikant niedrigen Übergangswiderstand von nur wenigen mΩ aufweist. Die anfallende Verlustwärme im Bereich einer Kontaktvorrichtung 20 ist gering.

Zur Erzielung einer guten elektrischen Kontaktierung ist das Distanzelement 10 und/oder das Klemmelement 11 galvanisch beschichtet, insbesondere vernickelt. Auch können Beschichtungen aus Zinn, Silber oder dgl. Material mit einer guten elektrischen Leitfähigkeit den Übergangswiderstand der Kontaktvorrichtung 20 reduzieren.

Wie in den Figuren 4 und 10 dargestellt, liegt das Distanzelement 10 im Wesentlichen vollständig im Aufnahmeraum 46 des Klemmelementes 11. Um das Aufbringen einer ausreichend großen Verbindungskraft V zu gewährleisten, ist der Spalt s zwischen dem Dachabschnitt 39 des Distanzelementes 10 und dem Boden 29 des Klemmelementes 11 vorgesehen, wodurch ein Spaltraum 57 ausgebildet ist. Das Klemmelement 11 ist somit ausschließlich über seine Druckflächen 24 und 25 auf dem Distanzelement 10 abgestützt, wobei durch Festziehen der Befestigungsschraube 28 die Fügekraft K und die Scherkraft S durch Einstellen der Verbindungskraft V wählbar ist. Um ein Aufweiten der Schenkel 45 des Klemmelementes 11 gering zu halten, ist vorgesehen, dass die Schenkel 45 steif ausgebildet sind. Dies kann durch eine entsprechende Materialstärke oder durch ein im Klemmelement 11 integriertes Versteifungsteil gewährleistet sein.

## Patentansprüche

1. Kontaktvorrichtung in einem Akkublock (1) aus einer Vielzahl einzelner Akkuzellen, insbesondere Flachzellen (6), die in einer vorgegebenen Anordnung (30) zueinander gehalten sind, mit aus einer Akkuzelle (6) jeweils herausgeführtem flächigen Kathodenableiter (7) und flächigem Anodenableiter (8), wobei zur elektrischen Verbindung ein Ableiter (7) einer ersten Akkuzelle (6) und ein Ableiter (8) einer benachbarten Akkuzelle (6) nebeneinander liegen und über eine Kontaktvorrichtung (20) miteinander elektrisch verbunden sind, wobei die Kontaktvorrichtung (20) aus einem zwischen zwei Ableitern (7, 8) liegenden länglichen Distanzelement (10) besteht und aus einem die Ableiter (7, 8) und das Distanzelement (10) übergreifenden länglichen Klemmelement (11) besteht, und das Klemmelement (11) die Ableiter (7, 8) elektrisch verbindend auf den Seitenflächen (24, 25) des Distanzelementes (10) hält, wobei das Klemmelement (11) aus einem im Querschnitt U-förmigen Grundkörper (41) besteht, dessen Schenkel (45) einander zugewandte, innere Druckflächen (35) aufweisen und jeder Druckfläche (35) eine Seitenfläche (24, 25) des Distanzelementes (10) gegenüberliegt, wobei die Seitenflächen (24, 25) und die Druckflächen (35) unter einem Winkel (α, ß) zur Längsmittelebene (33) der Kontaktvorrichtung (20) liegen, und dass zwischen dem Klemmelement (11) und dem Distanzelement (10) eine Verbindungskraft (V) aufgebracht ist, die sich in der Ebene der Druckfläche (35) in eine parallel zur Druckfläche (35) wirkende Scherkraft (S) und eine senkrecht zur Druckfläche (35) wirkende Fügekraft (K) aufteilt, **dadurch gekennzeichnet, dass** das Klemmelement (11) und/oder das Distanzelement (10) aus einem elektrisch leitenden Material besteht, und die Druckfläche (35) des Klemmelementes (11) und/oder die Seitenfläche (24, 25) des Distanzelementes (10) durch eine dreidimensionale Oberflächenstruktur (48, 58) aufgeraut ist.

2. Kontaktvorrichtung nach Anspruch 1,
**dadurch gekennzeichnet, dass** eine Druckfläche (35) und die ihr gegenüberliegende Seitenfläche (24, 25) parallel zueinander liegen.

3. Kontaktvorrichtung nach Anspruch 1 oder 2,
**dadurch gekennzeichnet, dass** die Druckflächen (35) einen sich zum Distanzelement (10) erweiternden Aufnahmeraum (46) begrenzen.

4. Kontaktvorrichtung nach Anspruch 3,
**dadurch gekennzeichnet, dass** der Aufnahmeraum (46) das Distanzelement (10) vollständig aufnimmt.

5. Kontaktvorrichtung nach Anspruch 3 oder 4,
**dadurch gekennzeichnet, dass** die Öffnungsweite (W) des Aufnahmeraums (46) des Klemmelementes (11) der äußeren Fußbreite (F) des Distanzelementes (10) entspricht.

6. Kontaktvorrichtung nach einem der Ansprüche 1 bis 5,
**dadurch gekennzeichnet, dass** bei Abstützung der Druckflächen (35) über die Seitenflächen (24, 25) zwischen dem Dachabschnitt (39) des Distanzelementes (10) und dem Boden (29) des Klemmelementes (11) ein Spaltraum (57) gebildet ist.

7. Kontaktvorrichtung nach einem der Ansprüche 1 bis 6,
**dadurch gekennzeichnet, dass** das Klemmelement (11) auf dem Distanzelement (10) verschraubt ist.

8. Kontaktvorrichtung nach einem der Ansprüche 1 bis 7,
**dadurch gekennzeichnet, dass** die Schenkel (45) des Grundkörpers (41) des Klemmelementes (11) steif ausgebildet sind.

9. Kontaktvorrichtung nach einem der Ansprüche 1 bis 8,
**dadurch gekennzeichnet, dass** das Klemmelement (11) und/oder das Distanzelement (10) aus Aluminium bestehen.

10. Kontaktvorrichtung nach einem der Ansprüche 1 bis 9,
**dadurch gekennzeichnet, dass** das Klemmelement (11) eine Teilumhüllung (23) aus einem elektrisch isolierenden Material wie Kunststoff trägt.

11. Kontaktvorrichtung nach Anspruch 10,
**dadurch gekennzeichnet, dass** die Teilumhüllung (23) die gesamte Außenfläche (42) des Klemmelementes (11) einschließlich dessen Stirnseiten (43) abdeckt.

12. Kontaktvorrichtung nach einem der Ansprüche 1 bis 11,
**dadurch gekennzeichnet, dass** die Oberflächenstruktur (48, 58) der Druckfläche (35) und/oder der Seitenfläche (24, 25) schuppig oder sägezahnartig ausgebildet ist.

13. Kontaktvorrichtung nach einem der Ansprüche 1 bis 11,
**dadurch gekennzeichnet, dass** die Oberflächenstruktur (48) der Druckfläche (35) und die Oberflächenstruktur (58) der ihr gegenüberliegenden Seitenfläche (24, 25) eine einander ergänzende Verzahnung (60) aufweisen.

14. Kontakvorrichtung nach einem der Ansprüche 1 bis 13,
**dadurch gekennzeichnet, dass** das Distanzelement (10) und/oder das Klemmelement (11) mit einer Beschichtung aus einem Material mit einer guten elektrischen Leitfähigkeit wie Nickel, Zinn oder Silber versehen ist.

## Claims

1. Contact device in a battery pack (1) of a plurality of individual battery cells, in particular flat cells (10), held in a predetermined arrangement (30) relative to one another, with a flat cathode arrester (7) and a flat anode arrester (8), each routed out of a battery cell (6), wherein for electric connection an arrester (7) of a first battery cell (6) and an arrester (8) of an adjacent battery cell (6) are located next to each other and electrically connected to each other via a contact device (20), wherein the contact device (20) consists of an oblong spacing element (10) located between two arresters (7, 8) and an oblong clamping element (11) encompassing the arresters (7, 8) and the spacing element (10) and the clamping element (11) holds the arresters (7, 8) in an electrically connecting manner on the side faces (24, 25) of the spacing element (10), wherein the clamping element (11) consists of a base body (41), which has a U-shaped cross-section and the legs (45) of which have inner contact surfaces (35) facing each other and a side face (24, 25) of the spacing element (10) is located opposite each contact surface (35), wherein the side faces (24, 25) and the contact surface (35) lie at an angle (α, β) to the longitudinal central axis (33) of the contact device (20), and wherein a connecting force (V) divided in the plane of the contact surface (35) into a shear force (S) acting parallel to the contact surface (35) and a joining force (K) acting perpendicularly to the contact surface (35) is applied between the clamping element (11) and the spacing element (10),
**characterised in that** the clamping element (11) and/or the spacing element (10) consist(s) of an electrically conductive material, and **in that** the contact surface (35) of the clamping element (11) and/or the side face (24, 25) of the spacing element (10) is/are toughened by a three-dimensional surface structure (48, 58).

2. Contact device according to claim 1,
**characterised in that** a contact surface (35) and the opposite side face (24, 25) extend parallel to each other.

3. Contact device according to claim 1 or 2,
**characterised in that** the contact surfaces (35) bound a reception space (46), which widens towards the spacing element (10).

4. Contact device according to claim 3,
**characterised in that** the reception space (46) accommodates the spacing element (10) completely.

5. Contact device according to claim 3 or 4,
**characterised in that** the opening width (W) of the reception space (46) of the clamping element (11) corresponds to the outer foot width (F) of the spacing element (10).

6. Contact device according to any of claims 1 to 5,
**characterised in that** a gap (57) is formed if the contact surfaces (35) are supported via the side faces (24, 25) between the roof section (39) of the spacing element (10) and the base (29) of the clamping element (11).

7. Contact device according to any of claims 1 to 6,
**characterised in that** the clamping element (11) is bolted onto the spacing element (10).

8. Contact device according to any of claims 1 to 7,
**characterised in that** the legs (45) of the base body (41) of the clamping element (11) are designed to be rigid.

9. Contact device according to any of claims 1 to 8,
**characterised in that** the clamping element (11) and/or the spacing element (10) consist(s) of aluminium.

10. Contact device according to any of claims 1 to 9,
**characterised in that** the clamping element (11) has a partial sheath (23) of an electrically insulating material such as plastics.

11. Contact device according to claim 10,
**characterised in that** the partial sheath (23) covers the entire outer surface (42) of the clamping element (11) including its end faces (43).

12. Contact device according to any of claims 1 to 11,
**characterised in that** the surface structure (48, 58) of the contact surface (35) and/or of the side faces (24, 25) is scaly or sawtooth-like.

13. Contact device according to any of claims 1 to 11,
**characterised in that** the surface structure (48) of the contact surface (35) and the surface structure (58) of the opposite side face (24, 25) have a mutually complementary toothing (60).

14. Contact device according to any of claims 1 to 13,
**characterised in that** the spacing element (10) and/or the clamping element (11) is/are provided with a coating of a material having a good electric conductivity, such as nickel, tin or silver.

## Revendications

1. Dispositif de contact dans un bloc batterie (1) composé d'un grand nombre d'éléments de batterie individuels, en particulier d'éléments plats (6), qui sont retenus les uns par rapport aux autres dans une disposition prédéfinie (30), avec un conducteur cathodique plat (7) et un conducteur anodique plat (8) sortant d'un élément de batterie (6), dans lequel pour la liaison électrique un conducteur (7) d'un premier élément de batterie (6) et un conducteur (8) d'un premier élément de batterie (6) voisin se trouvent côte-à-côte et sont reliés électriquement entre eux par l'intermédiaire d'un dispositif de contact (20), dans lequel le dispositif de contact (20) se compose d'un élément d'écartement oblong (10) situé entre deux conducteurs (7, 8) et se compose d'un élément de serrage oblong (11) couvrant les conducteurs (7, 8) et l'élément d'écartement (10), et l'élément de serrage (11) retient les conducteurs (7, 8) électriquement reliés sur les surfaces latérales (24, 25) de l'élément d'écartement (10), dans lequel l'élément de serrage (11) se compose d'un corps de base (41) à section transversale en U dont les branches (45) présentent des surfaces de pression intérieures (35) tournées l'une vers l'autre, et en face de chaque surface de pression (35) se trouve une surface latérale (24, 25) de l'élément d'écartement (10), dans lequel les surfaces latérales (24, 25) et les surfaces de pression (35) définissent un angle (α, β) par rapport au plan longitudinal médian (33) du dispositif de contact (20), et en ce qu'entre l'élément de serrage (11) et l'élément d'écartement (10) est appliquée une force de liaison (V) qui se divise, dans le plan de la surface de pression (35), en une force de cisaillement (S) agissant parallèlement à la surface de pression (35), et une force d'assemblage (K) agissant perpendiculairement à la surface de pression (35), **caractérisé en ce que** l'élément de serrage (11) et/ou l'élément d'écartement 10) se composent d'un matériau conducteur d'électricité, et la surface de pression (35) de l'élément de serrage (11) et/ou la surface latérale (24, 25) de l'élément d'écartement (10) sont rendues rugueuses par une structure superficielle à trois dimensions (48, 58).

2. Dispositif de contact selon la revendication 1,
**caractérisé en ce qu'**une surface de pression (35) et la surface latérale (24, 25) qui lui fait face sont parallèles.

3. Dispositif de contact selon la revendication 1 ou 2,
**caractérisé en ce que** les surfaces de pression (35) délimitent un logement (46) qui s'élargit vers l'élément d'écartement (10).

4. Dispositif de contact selon la revendication 3,
**caractérisé en ce que** le logement (46) loge entièrement l'élément d'écartement (10).

5. Dispositif de contact selon la revendication 3 ou 4,
**caractérisé en ce que** la largeur d'ouverture (W) du logement (46) de l'élément de serrage (11) correspond à la largeur de base extérieure (F) de l'élément d'écartement (10).

6. Dispositif de contact selon l'une des revendications 1 à 5,
**caractérisé en ce que** lors de l'appui des surfaces de pression (35) sur les surfaces latérales (24, 25), un interstice (57) est formé entre la section supérieure (39) de l'élément d'écartement (10) et le fond (29) de l'élément de serrage (11).

7. Dispositif de contact selon l'une des revendications 1 à 6,
**caractérisé en ce que** l'élément de serrage (11) est vissé sur l'élément d'écartement (10).

8. Dispositif de contact selon l'une des revendications 1 à 7,
**caractérisé en ce que** les branches (45) du corps de base (41) de l'élément de serrage (11) sont rigides.

9. Dispositif de contact selon l'une des revendications 1 à 8,
**caractérisé en ce que** l'élément de serrage (11) et/ou l'élément d'écartement (10) sont en aluminium.

10. Dispositif de contact selon l'une des revendications 1 à 9,
**caractérisé en ce que** l'élément de serrage (11) porte un enrobage partiel (23) en matériau électriquement isolant tel qu'une matière plastique.

11. Dispositif de contact selon la revendication 10,
**caractérisé en ce que** l'enrobage partiel (23) couvre toute la surface extérieure (42) de l'élément de serrage (11) y compris les côtés frontaux (43) de celui-ci.

12. Dispositif de contact selon l'une des revendications 1 à 11,
**caractérisé en ce que** la structure superficielle (48, 50) de la surface de pression (35) et/ou de la surface latérale (24, 25) écailleuse ou en forme de dents de scie.

13. Dispositif de contact selon l'une des revendications 1 à 11,
**caractérisé en ce que** la structure superficielle (48) de la surface de pression (35) et la structure superficielle (58) de la surface latérale (24, 25) qui lui fait face présentent des dentures (60) qui se complètent mutuellement.

14. Dispositif de contact selon l'une des revendications 1 à 13,
**caractérisé en ce que** l'élément d'écartement (10) et/ou l'élément de serrage (11) sont pourvus d'un revêtement en un matériau doté d'une bonne conductibilité électrique comme le nickel, l'étain ou l'argent.
